Europäisches Patentamt

European Patent Office

Office européen des brevets

(19)

(11) EP 0 769 473 B1

(12) **FASCICULE DE BREVET EUROPEEN**

(45) Date de publication et mention
de la délivrance du brevet:
**19.01.2000 Bulletin 2000/03**

(51) Int Cl.⁷: **C01F 7/56**

(21) Numéro de dépôt: **96402174.5**

(22) Date de dépôt: **11.10.1996**

(54) **Procédé de préparation de polychlorure d'aluminium basique et son application au traitement de milieux aqueux**

Verfahren zur Herstellung von basischem Aluminiumpolychlorid und seine Anwendung für die Behandlung von wasserhaltigen Media

Method for producing basic polyaluminium chloride and its use for the treatment of aqueous media

(84) Etats contractants désignés:
**AT BE CH DE DK ES FI FR GB GR IE IT LI LU MC NL PT SE**

(30) Priorité: **20.10.1995 FR 9512394**

(43) Date de publication de la demande:
**23.04.1997 Bulletin 1997/17**

(73) Titulaire: **RHODIA CHIMIE
92408 Courbevoie Cédex (FR)**

(72) Inventeurs:
• **Vallier, Emmanuelle
93300 Aubervilliers (FR)**
• **Pescher, Yvette
92220 Bagneux (FR)**

• **Raskopf, Gilles
14600 Equemauville (FR)**

(74) Mandataire: **Le Guen, Gérard et al
CABINET LAVOIX
2, place d'Estienne d'Orves
75441 Paris Cédex 09 (FR)**

(56) Documents cités:
**EP-A- 0 383 736        US-A- 4 877 597**

• **CHEMICAL ABSTRACTS, vol. 115, no. 6, 12 Août 1991 Columbus, Ohio, US; abstract no. 52874a, XP002005983 & CN-A-1 048 686 (FAMING ZHUANLI SHENQING GONGKAI SHUOMINGSHU) 23 Janvier 1991**

**Description**

La présente invention concerne un procédé de préparation de polychlorure d'aluminium basique utilisable comme agent coagulant dans le traitement des effluents, des eaux résiduaires ou des eaux usées.

Ledit polychlorure d'aluminium basique est notamment utilisable dans le traitement de milieux aqueux, d'eaux résiduaires, par exemple d'eaux potables.

Le procédé de purification d'eaux résiduaires ou usées comprend habituellement plusieurs phases, différenciées principalement par la vitesse d'agitation du milieu à traiter. La première phase sous forte agitation consiste à mettre l'eau à traiter en contact avec un agent coagulant. Puis la vitesse d'agitation est diminuée de façon à permettre la coagulation. Enfin, dans une dernière phase le mélange eau/coagulant est maintenu au repos afin que les particules formées décantent et puissent être séparées. Le surnageant est ensuite soutiré pour subir éventuellement d'autres étapes de purification classiques comme, par exemple, une nitrification-dénitrification biologique ou une étape d'oxydation chimique ou biochimique.

On connaît à l'heure actuelle divers types d'agents coagulants. On peut citer le chlorure ferreux, le chlorure ferrique, le chlorosulfate ferrique et le sulfate ferrique. On peut mentionner également les sulfates d'aluminium basiques et les chlorosulfates d'aluminium basiques tels que ceux décrits dans la demande de brevet français FR 2 418 297 ou ceux faisant l'objet de la demande européenne EP 0218 487.

Comme alternative on a proposé l'utilisation de polychlorures d'aluminium.

Les polychlorures d'aluminium ont pour formule générale:

$$[Al_n(OH)_m \ Cl_{3n-m}][H_2O]_z,$$

la valeur de m étant proportionnelle à leur basicité.

Or, l'efficacité de ce type de composé est fonction de leur basicité. L'obtention de polychlorures d'aluminium fortement basiques est particulièrement avantageuse puisque ceux-ci présentent non seulement les propriétés basiques voulues mais assurent également une teneur suffisante en aluminium dans les solutions traitées, une concentration élevée en aluminium étant favorable au processus de coagulation.

Jusqu'à présent, la préparation de polychlorures d'aluminium basiques passe soit par la réaction sous pression d'un composé renfermant des ions chlorures (tel que $AlCl_3$ ou HCl) sur de l'hydrate d'alumine à une température comprise entre 160 et 180°C pendant plusieurs heures, soit par réaction d'aluminates sur un sel d'aluminium à une température modérée (40-60° C) pendant plusieurs heures ou bien en réacteur fermé, conduisant à la formation de pseudo-boehmite.

Ces procédés sont cependant fastidieux, le premier en raison de la durée importante de réaction, le second parce qu'il nécessite une étape ultérieure de filtration, puis l'addition d'acide chlorhydrique de façon à ajuster la basicité du produit obtenu.

Le procédé, objet de l'invention, qui permet de pallier ces différents inconvénients en proposant une méthode de préparation de polychlorures d'aluminium basiques en un laps de temps plus court et sans étape intermédiaire de filtration met en oeuvre la réaction, en milieu aqueux, d'un aluminate de métal alcalin sur du polychlorure d'aluminium légèrement basique.

Lors du mélange desdits réactifs, un précipité se forme qu'il est ensuite nécessaire de dissoudre, une solution limpide de polychlorure d'aluminium étant souhaitée.

En réalisant ladite réaction dans un réacteur classique et en introduisant, sous agitation, l'aluminate alcalin et l'eau dans le ciel dudit réacteur préalablement chargé de polychlorure d'aluminium acide ou légèrement basique, on se heurte à un certain nombre de problèmes: la nature corrosive des réactifs mis en présence impose l'utilisation d'un réacteur résistant aux attaques chimiques, tel qu'un réacteur vitrifié. Or, le choix d'un tel réacteur limite les possibilités d'agitation en interdisant notamment l'utilisation d'une turbine de type Rushton dissipant jusqu'à 0,8 à 0,9 kW/$m^3$ à 600 t/mn. Dans ces conditions, on constate sans pouvoir y remédier, la prise en masse du polychlorure d'aluminium basique, produit de la réaction : de ce fait, les temps de dissolution se trouvent prolongés de façon excessive et le résultat de l'étape de dissolution n'est pas satisfaisant puisque la composition résultante reste turbide et donc inutilisable pour le traitement d'eaux potables.

Il a été découvert que l'on peut résoudre ces problèmes en réalisant la mise en contact desdits réactifs dans une zone turbulente de façon à éviter notamment la formation d'espèces intermédiaires qu'il est ensuite très difficile, voire impossible, de redissoudre.

C'est ainsi que l'invention a pour objet un procédé de préparation d'un polychlorure d'aluminium basique comprenant:

(i) le mélange d'un polychlorure d'aluminium légèrement basique (réactif A) avec un aluminate de métal alcalin (réactif B) dans un mélangeur et

(ii) la dissolution du précipité obtenu dans un réacteur,

procédé dans lequel ledit mélangeur est situé en amont dudit réacteur, et les réactifs A et B sont introduits séparément dans ledit mélangeur sous la forme de deux courants confluants, le mélange des deux réactifs A et B ayant lieu dans une zone d'écoulement turbulent au sein dudit mélangeur.

Selon un mode de réalisation préféré, le mélange est réalisé dans un mélangeur constitué de trois chambres tubulaires communicantes et formant un Y, ledit polychlorure d'aluminium légèrement basique (réactif A) et ledit aluminate de métal alcalin (réactif B) entrant respectivement dans les deux chambres formant le V du Y, et ledit précipité sortant par la chambre située dans le prolongement de la bissectrice de l'angle formé par lesdites chambres en V, les débits des deux courants confluants de réactifs A et B étant tels que la mise en contact desdits réactifs a lieu dans une zone d'écoulement turbulent.

Le polychlorure d'aluminium de départ est un composé légèrement basique auquel l'homme du métier aura facilement accès, soit qu'il l'aura obtenu à partir d'un polychlorure d'aluminium du commerce, soit qu'il l'aura préparé par mise en oeuvre de l'un des procédés connus dans la technique. Il est à noter que des polychlorures d'aluminium sont décrits dans EP 626 347, US 3 929 666, FR 2 534 897 et FR 2 584 699.

Plus précisément, les polychlorures d'aluminium de départ utilisables selon l'invention ont généralement pour formule :

$$[Al_n(OH)_mCl_{3n-m}][H_2O]_z$$

dans laquelle n, m, z et 3n-m sont des entiers positifs, Z étant au moins égal à 3.

Les polychlorures d'aluminium de départ préférés sont ceux présentant une teneur équivalente en $Al_2O_3$ comprise entre 13 et 18 %. Une teneur inférieure en $Al_2O_3$ est peu recommandée dans la mesure où elle conduirait à une solution finale à teneur réduite en aluminium.

Les polychlorures d'aluminium de départ sont ici employés habituellement sous forme de solutions aqueuses. Ils peuvent être de plus dilués par de l'eau avant leur introduction dans le mélangeur de forme Y.

Leur basicité b est définie par l'équation :

$$b = \frac{[OH^-]}{3.[Al^{3+}]}$$

Elle est de préférence comprise entre 15 et 50 %, en particulier entre 18 et 48 %.

Les aluminates de métal alcalin utilisables selon l'invention sont disponibles dans le commerce. Comme aluminate de métal alcalin préféré, on citera l'aluminate de sodium, lequel conduit à d'excellents résultats. De manière préférée la teneur équivalente en $Na_2O$ de l'aluminate de sodium est comprise entre 18 et 22 %, notamment entre 19 et 21 %. Au mieux, elle sera de 20 %.

Toujours selon un mode de réalisation préféré de l'invention, la teneur équivalente en $Al_2O_3$ de l'aluminate de métal alcalin est comprise entre 10 et 25 %, de préférence entre 22 et 24 %.

Les plages de variations rapportées ci-dessus sont données exclusivement à titre indicatif et n'entendent nullement limiter l'invention.

L'aluminate de métal alcalin est ici utilisé en général sous forme d'une solution aqueuse.

De manière avantageuse, l'aluminate de métal alcalin pourra être de plus dilué par de l'eau avant son introduction dans le mélangeur de forme Y.

Selon une caractéristique essentielle du procédé préféré de l'invention, le mélange des deux réactifs, à savoir d'une part le polychlorure d'aluminium légèrement basique (réactif A) et d'autre part l'aluminate de métal alcalin (réactif B), est réalisé dans un mélangeur en forme de Y dans lequel les deux réactifs sont mis en contact l'un avec l'autre et maintenus en contact dans une zone d'écoulement turbulent.

Le mélangeur alors utilisé est constitué de trois chambres tubulaires communicantes disposées en Y. Les deux réactifs A et B sont respectivement introduits à l'embouchure des deux chambres formant le V du Y, les débits de ces deux réactifs étant déterminés de façon à ce qu'au point de confluence les deux courants de réactifs entrent en contact l'un avec l'autre dans une zone d'écoulement suffisamment turbulent. Cette condition est essentielle pour obtenir un mélange efficace des deux réactifs: de fait il est indispensable que la cinétique de mélange des constituants A et B soit plus rapide que la cinétique des réactions mises en jeu.

Les deux courants de réactifs se mélangent non seulement lors de leur entrée en contact au point de convergence des deux chambres disposées en V mais également lors de leur passage dans la chambre située dans le prolongement de la bissectrice de l'angle formé par lesdites chambres en V, pendant toute la durée de l'écoulement turbulent.

La longueur de la chambre située en sortie du mélangeur, désignée par la suite chambre de contact, est telle que le mélange des réactifs et donc leur mise en contact, se poursuit au sein de cette chambre jusqu'à réaction complète ou quasi complète. En déterminant la géométrie du mélangeur on gardera toutefois à l'esprit qu'une longueur exagérée de la chambre de contact pourra à l'usage poser des problèmes d'encrassement peu souhaitables.

De façon à limiter l'encrassement du mélangeur, on le disposera de préférence à la verticale, les chambres en V formant la partie supérieure du mélangeur.

Le diamètre de la chambre tubulaire de contact est essentiellement fonction de la productivité souhaitée, et donc du débit du produit préparé en sortie du mélangeur de forme Y.

Concernant les diamètres des chambres d'introduction des réactifs, disposées en V, ceux-ci dépendent des débits respectifs des deux courants confluants de réactifs, qui sont fonction de la productivité souhaitée et de la composition des réactifs et des caractéristiques du produit à préparer : les dimensions desdites chambres doivent être calculées de préférence de façon à ce qu'un régime suffisamment turbulent puisse s'établir au point de convergence, le régime turbulent assurant notamment l'efficacité de mélange.

De manière préférée, les deux chambres d'introduction auront des dimensions (diamètre et longueur) égales.

Il peut être avantageux que le diamètre des chambres d'introduction représente de 8 à 15% de leur longueur.

Selon un mode de réalisation préféré, le rapport

$$r_L = \frac{Li}{Lc}$$

de la longueur des chambres d'introduction (Li) à la longueur de la chambre de contact (Lc) est compris entre 1 et 2. Au mieux il sera voisin de 1,5.

De même, le rapport:

$$r_D = \frac{Di}{Dc}$$

du diamètre des chambres d'introduction (Di) au diamètre de la chambre de contact (Dc) sera avantageusement compris entre 1/3 et 2/3. De préférence, il sera voisin de 5/8.

Avantageusement, les deux chambres communicantes disposées en V forment un angle droit.

Le mélangeur en Y utilisable dans l'invention est soit constitué de trois canalisations disposées en Y, soit encore constitué de trois cavités ménagées dans un bloc de matériau (par exemple un bloc de graphite usiné dans la masse) et revêtues intérieurement, le cas échéant, d'un enduit étanche tel qu'une résine synthétique.

Les résines particulièrement adaptées à une telle opération d'étanchéification sont bien connues de l'homme du métier. Elles sont choisies de façon à résister aux conditions de basicité et de température qu'implique la mise en oeuvre du procédé de l'invention.

De façon à déterminer les paramètres opératoires tels que les quantités de réactifs mis en jeu et leur débit respectif à l'entrée du mélangeur de type Y, on tiendra compte du volume de production souhaité, des dimensions du mélangeur et notamment des dimensions des chambres d'introduction des réactifs, de la basicité des réactifs ainsi que de leur teneur équivalente en $Al_2O_3$, mais aussi des caractéristiques du produit final ciblé, à savoir sa basicité et sa teneur équivalente en $Al_2O_3$. La basicité b du polychlorure d'aluminium ciblé est défini par l'équation :

$$b = \frac{[OH^-]}{3.[Al^{3+}]}$$

où $[OH^-]$ est la concentration en ions $OH^-$ de la solution finale et $[Al^{3+}]$ est sa concentration en ions $Al^{3+}$.

Le polychlorure d'aluminium résultant du procédé de l'invention présente avantageusement une basicité comprise entre 55 et 80 %.

Notamment pour son application au traitement des eaux résiduaires, en particulier des eaux potables, une basicité comprise entre 58 et 80 %, voire entre 65 et 75 %, est préférée. Il résulte de la définition même de la basicité, qu'à une valeur de b donnée, correspond une valeur donnée du rapport $[OH^-]/[Al^{3+}]$. La basicité du polychlorure d'aluminium préparé est donc inversement proportionnelle à sa teneur équivalente en alumine.

Pour une basicité comprise entre 58 et 80 %, la teneur équivalente en alumine du produit de la réaction varie entre 11 et 18 %, étant entendu qu'à une basicité maximale de 80 % correspond une teneur maximale en alumine de 11 % et qu'à une basicité maximale de 58 % correspond une teneur maximale en alumine de 18 %.

Ainsi, en fonction des caractéristiques des réactifs de départ et notamment de leurs basicité et teneur équivalente en $Al_2O_3$ et suivant la basicité recherchée dans le produit final, il est donc possible de déterminer les volumes respectifs de réactifs A et B devant être mélangés.

Les débits des courants de réactifs sont notamment fonction de la production globale. Leur détermination est par ailleurs en général essentielle puisque ceux-ci doivent assurer la mise en place d'une zone d'écoulement turbulent au niveau de la zone de contact.

Pour leur détermination l'homme de l'art pourra réaliser par exemple quelques essais préliminaires à une échelle réduite, lesquels lui permettront de définir une valeur seuil de débit au-dessous de laquelle l'efficacité du mélange est insuffisante ainsi qu'une valeur optimale, étant entendu qu'une augmentation exagérée des débits des réactifs n'est pas souhaitable dans la mesure où plus les vitesses augmentent, plus la perte de charge à l'entrée du tube Y augmente. Pour une extrapolation à l'échelle industrielle, il suffira simplement de conserver les valeurs des vitesses linéaires correspondant aux valeur optimales des débits déterminées à l' échelle réduite. Naturellement, une légère variation des deux vitesses linéaires pourra être tolérée, dans la mesure où le rapport entre celles-ci est conservé. Par ailleurs, éventuellement, quelques essais supplémentaires en grandeur réelle pourront amener l'homme du métier à optimiser les conditions opératoires exactes.

Selon une variante préférée, le début de l'addition du polychlorure d'aluminium légèrement basique précédera légèrement l'addition de l'aluminate dilué et ceci afin que le pH du mélange dans le tube Y soit suffisamment acide en début de réaction pour éviter l'apparition d'espèces intermédiaires très difficilement solubles, voire insolubles. On retiendra de plus qu'en milieu trop basique le polychlorure d'aluminium est très peu soluble.

Selon un mode de réalisation préféré de l'invention, les débits respectifs des deux réactifs sont maintenus constants. La cinétique de la réaction entre les actifs A et B étant très rapide, c'est un gel rhéo-fluidifiant de viscosité relativement élevée contenant le polychlorure d'aluminium souhaité sous forme d'un précipité, qui est récupéré en sortie du mélangeur.

La dissolution du précipité contenu dans le gel est réalisée, par exemple, dans un autoclave sous agitation généralement constante. Cette étape est communément désignée dans la technique sous le nom de mûrissement.

Selon l'invention, le mûrissement peut avoir lieu à la température ambiante ou à une température supérieure n'excédant pas cependant les 120° C, de préférence à une température comprise entre 90 et 120° C, par exemple entre 95 et 120° C.

La durée de cette étape est bien sûr fonction de la température exacte de mûrissement. Habituellement à 110°C le mûrissement est poursuivi pendant 30 à 60 mm.

Par contre à 120° C, au-delà de 2h, on risque une dégradation du produit de la réaction.

Une variante particulièrement intéressante du procédé de l'invention consiste à disposer le mélangeur en forme de Y décrit ci-dessus immédiatement à l'entrée de l'autoclave de telle sorte que le mélange issu du mélangeur et contenant le précipité soit directement introduit dans l'autoclave. Selon une variante plus particulièrement préférée de l'invention, le procédé mis en oeuvre comprend les étapes consistant à :

(i) introduire, dans un autoclave un pied de cuve constitué d'une solution aqueuse de polychlorure d'aluminium dont la basicité est la plus proche possible de celle du polychlorure d'aluminium basique ciblé, ledit autoclave étant muni d'une agitation efficace et étant équipé à l'un de ses orifices d'entrée, d'un mélangeur de type Y tel que défini ci-dessus;

(ii) éventuellement chauffer l'autoclave maintenu sous agitation jusqu'à ce que la température du pied de cuve atteigne une valeur comprise entre 25 et 70° C;

(iii) introduire respectivement une solution de polychlorure d'aluminium légèrement basique et un aluminate alcalin dans les deux chambres en V du mélangeur de type Y, en ajustant les débits respectifs des deux courants de réactifs de façon à ce que ceux-ci entrent en contact l'un avec l'autre dans une zone d'écoulement turbulent, le mélange résultant sortant par la chambre située dans le prolongement de la bissectrice de l'angle formé par les chambres en V et entrant directement dans l'autoclave , ledit autoclave étant maintenu sous agitation constante pendant toute la durée de l'addition des réactifs;

(iv) fermer l'autoclave en fin d'addition des réactifs et le cas échéant, chauffer ledit autoclave, jusqu'à ce que le température du milieu réactionnel atteigne une valeur comprise entre la température ambiante et 120° C;

(v) maintenir le milieu réactionnel sous agitation efficace à ladite température pendant 30 à 60 mn;

(vi) le cas échéant, refroidir l'installation, et, soutirer de l'autoclave le polychlorure d'aluminium basique attendu.

La vitesse de montée en température à l'étape (iv) n'est pas un paramètre essentiel de l'invention. Elle pourra être comprise entre 0,1 et 10°C/mn, plus avantageusement entre 0,2 et 0,8°C/mn.

De façon à refroidir l'installation, l'homme du métier pourra utiliser les moyens qui sont à sa disposition, et notamment mettre à profit des échanges thermiques entre la masse chaude de polychlorure d'aluminium et une circulation d'eau froide. Plus simplement il pourra laisser refroidir l'autoclave à température ambiante.

Le fait de placer un pied de cuve dans l'autoclave permet de conserver tout au long de l'addition des réactifs une viscosité assez faible, ce qui peut améliorer l'efficacité de mélange et le cas échéant les échanges thermiques au sein de l'autoclave.

Par ailleurs, le préchauffage du pied de cuve accélère la cinétique de dissolution du précipité formé intermédiairement, tout en contribuant à une meilleure homogénéisation du mélange.

Habituellement la température du pied de cuve sera fixée à une valeur comprise entre 50 et 70° C, de préférence elle sera voisine de 60° C.

Selon cette variante préférée de l'invention, le pied de cuve est constitué d'une solution de polychlorure d'aluminium dont la basicité est la plus proche possible de celle du produit ciblé.

Si l'on ne dispose que de polychlorure d'aluminium très faiblement basique, on pourra néanmoins ajouter celui-ci à l'autoclave. Toutefois, plus les propriétés acido-basiques de la solution constituant le pied de cuve s'écartent de celles du produit cible, plus le volume de pied de cuve ajouté sera faible.

Pour des raisons pratiques toutefois, on choisira le volume du pied de cuve de telle sorte qu'une agitation de celui-ci soit possible compte tenu de la géométrie de la cuve et de son agitateur.

On notera également que suivant la nature du pied de cuve, et plus particulièrement suivant sa teneur équivalente en $Al_2O_3$ et sa basicité, il conviendra de modifier les quantités respectives des deux réactifs de départ et ceci en vue de préparer le polychlorure d'aluminium ciblé, de basicité b donnée.

Il est clair qu'à chaque nouvelle mise en oeuvre du procédé de l'invention, l'homme du métier pourra utiliser en tant que pied de cuve, une partie du polychlorure d'aluminium obtenu précédemment. C'est ainsi qu'après un certain nombre d' itérations, la formulation du pied de cuve sera relativement proche de celle du produit ciblé.

En théorie, lorsqu'il y a identité entre la composition du pied de cuve et la composition du produit à synthétiser, le volume de pied de cuve pouvant être ajouté n'est pas limité.

Le pied de cuve ajouté peut éventuellement être constitué d'une solution de polychlorure d'aluminium diluée dans l'eau. Dans ce cas ladite solution diluée pourra contenir jusqu'à 20 % d'eau en poids. Une telle dilution doit également être prise en compte lors du calcul des quantités respectives de réactifs. Naturellement dans ces conditions, le volume maximal de pied de cuve sera limité par la teneur souhaitée en aluminium du produit fini et sa basicité.

L'un des avantages de l'invention réside dans la limpidité du polychlorure d'aluminium obtenu à l'issue du procédé, Celle-ci peut facilement être évaluée à l'oeil nu ou plus précisément par une mesure de turbidité selon la norme française NFT 90-033 (septembre 1985).

Or, la turbidité du polychlorure d'aluminium peut être rédhibitoire dans certaines applications comme le traitement des eaux potables. Elle est liée à un taux de matières solides en suspension plus ou moins élevé.

Ainsi, le procédé de l'invention constitue un progrès technique considérable puisqu'il conduit à un polychlorure d'aluminium combinant une basicité élevée et, de préférence, une limpidité optimale inférieure à 20 NTU, par exemple à 15 NTU, sans poser le moindre problème de prise en masse, en un temps relativement bref, fonction de la température de mûrissement.

Le polychlorure d'aluminium basique obtenu par le procédé de l'invention est utilisable dans le traitement des milieux aqueux, et notamment des eaux résiduaires ou des eaux potables.

Le produit résultant du procédé de l'invention est ajouté au milieu aqueux à traiter dans des proportions variables en fonction du milieu à traiter.

L'invention sera mieux comprise à la lecture de la description qui va suivre donnée uniquement à titre d'exemple et faite en référence aux dessins sur lesquels :

- la Figure 1 est une vue schématique d'une installation propre à la mise en oeuvre du procédé de l'invention, selon un mode de réalisation préféré;

- la Figure 2 est une vue en coupe transversale d'un mélangeur de forme Y utilisable suivant un mode de réalisation préféré de l'invention.

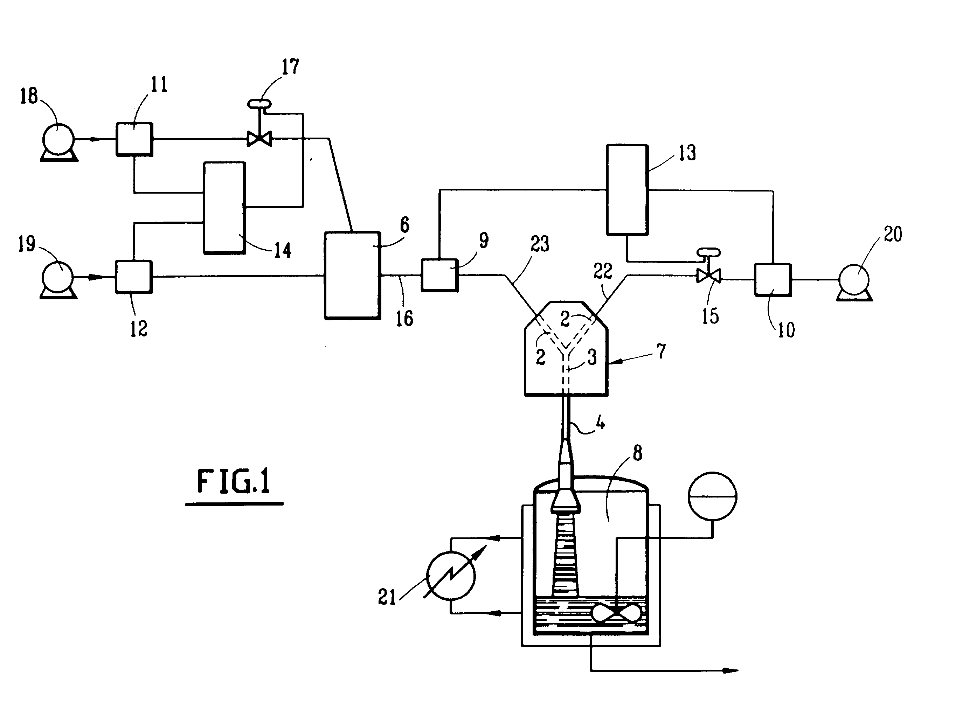

Sur la Figure 1, on a représenté le schéma d'une installation pour la mise en oeuvre du procédé de l'invention. Cette installation comprend un mélangeur statique conventionnel 6, un mélangeur en forme d'Y 7 et un réacteur 8 résistant à la pression, en l'occurrence un autoclave. Le réacteur 8 présente une double enveloppe permettant les échanges de chaleur tour à tour avec une source chaude ou une source froide. Le mélangeur en forme d'Y 7 est disposé à la verticale de telle sorte que sa conduite de sortie 4 est directement raccordée à l'entrée du réacteur 8. Les entrées 2 du mélangeur en forme d'Y 7 servent respectivement à l'alimentation en polychlorure d'aluminium légèrement basique et à l'alimentation en solution diluée d'aluminate de métal alcalin. En amont du mélangeur de forme Y et sur les conduites d'alimentation en polychlorure d'aluminium 22 et en aluminate de métal alcalin 23 , ont été installés des débitmètres électroniques 9, 10. Un microprocesseur 13 servant à la régulation des débits respectifs de solution diluée d'aluminate de métal alcalin et de polychlorure d'aluminium est relié aux débitmètres 9 et 10. Plus exactement, le microprocesseur 13 contrôle la vanne de réglage électropneumatique 15, à partir des deux valeurs de débit relevées par les débitmètres 9, 10. La solution d'aluminate de métal alcalin utilisée pour l'alimentation du mélangeur de type Y est une solution diluée récupérée en sortie 16 du mélangeur statique 6. Le mélangeur 6 est l'un quelconque des mélangeurs statiques de type conventionnel à la disposition de l'homme du métier, tel que par exemple un mélangeur référencé DN 40 L 300, commercialisé par la Société Lightnin. Le mélangeur 6 est alimenté d'une part en eau et d'autre part en aluminate de métal alcalin. En amont du mélangeur 6 est disposé un système de régulation en tout point analogue à celui situé en amont du mélangeur de forme Y, lequel est constitué des débitmètres 11, 12 et d'un microprocesseur 14. Le microprocesseur 14 contrôle directement la vanne électropneumatique de réglage 17, à partir des valeurs de débit relevées respectivement au niveau des débitmètres 11, 12. Trois pompes 18, 19, 20 asservies à des moteurs à variations de fréquence complètent l'installation; elles assurent respectivement l'alimentation en eau 18, aluminate de sodium 19 et en polychlorure d'aluminium légèrement basique 20.

De manière préférée, les trois pompes qui gèrent l'alimentation en polychlorure d'aluminium légèrement basique, en aluminate de sodium et en eau, sont associées à un circuit de dérivation avec clapet de sécurité qui permet, lorsque la surpression atteint une valeur trop élevée (fixée par exemple à 10 bars), de renvoyer les réactifs dans leur bac de stockage respectif.

On pourra par exemple optimiser la régulation des débits de la façon suivante :

Dans un premier temps, la consigne de débit d'aluminate non dilué est fixée à la valeur théorique calculée en tenant compte des teneurs équivalentes respectives en $Al_2O_3$ des différents réactifs, de la basicité du polychlorure d'aluminium de départ, de la basicité recherchée dans le polychlorure d'aluminium final ainsi que de la géométrie du mélangeur en forme d'Y. La consigne de débit d'eau est fonction du débit effectif en aluminate non dilué de façon à ce que la composition du mélange en sortie du mélangeur 6 soit conforme à la valeur théorique calculée. Pour ce qui est de la consigne de débit de polychlorure d'aluminium légèrement basique de départ, celle-ci dépend du débit effectif d'aluminate dilué mesuré par le débitmètre 9.

Les temporisations sont par exemple réglées de telle sorte que l'addition de polychlorure d'aluminium légèrement basique précède légèrement l'addition d'aluminate de métal alcalin. L'addition est arrêtée lorsque le volume total d'aluminate de métal alcalin est atteint.

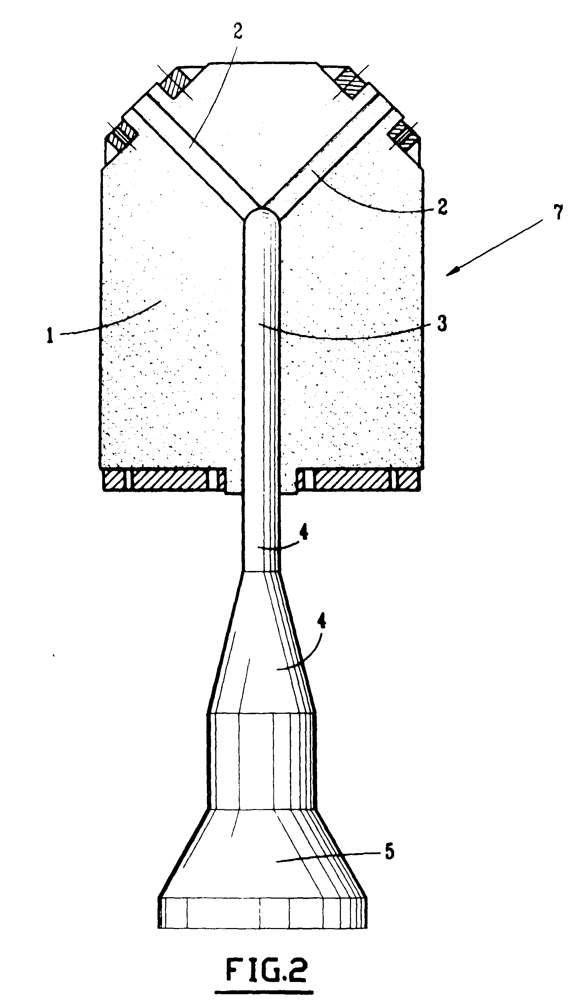

Plus précisément, on a représenté sur la Figure 2 la géométrie d'un mélangeur rapide en forme d'Y. Dans un bloc de graphite 1 usiné dans la masse ont été ménagées 3 cavités 2, 3. De façon à assurer l'étanchéité, ces cavités ont été revêtues d'une résine synthétique (résine phénolique en particulier). Les cavités 2 disposées symétriquement par rapport à la cavité 3, forment un angle de 90°. Plus exactement, la cavité 3 est située dans le prolongement de la bissectrice de l'angle formé par lesdites cavités 2. Les cavités 2 sont dimensionnées à l'identique, c'est-à-dire qu'elles présentent même diamètre et même longueur. Le rapport du diamètre des cavités 2 au diamètre de la cavité 3 est de 5/8, alors que le rapport de la longueur des cavités 2 à la longueur de la cavité 3 est de 2/3. Les cavités 2 sont utilisées pour l'introduction des réactifs, l'une d'elles étant réservée à l'alimentation en aluminate de métal alcalin, l'autre étant réservée à l'alimentation en polychlorure d'aluminium légèrement basique.

C'est par la cavité 3 que sort le mélange constitué du gel rhéo-fluidifiant contenant le produit de la réaction, à savoir le polychlorure d'aluminium basique, sous la forme d'un précipité.

Dans le mode de réalisation préféré, représenté à la Figure 1, la cavité 3 est prolongée par une conduite 4 à l'extérieur du bloc de graphite.

A sa partie inférieure, la conduite 4 est élargie diamétralement et présente à son extrémité un tronçon conique 5 destiné à faciliter son adaptation à l'entrée de l'autoclave. De manière avantageuse, le plus large diamètre de la conduite 4 correspond au double du diamètre de la cavité 3, et le rapport du diamètre de l'extrémité inférieure du tronçon conique au diamètre de la cavité 3 est de 5.

Les exemples proposés ci-dessous illustrent l'invention sans toutefois la limiter.

EXEMPLE 1

Les réactifs utilisés dans cet exemple sont respectivement:

- un polychlorure d'aluminium de stoechiométrie :

$$Al(OH)_{0,6}Cl_{2,4}, 14.H_2O$$

ayant une teneur équivalente en $Al_2O_3$ de 13 % en masse, et une basicité de 18 %,

- et un aluminate de soude de formule $Al(OH)_4Na$ caractérisé par une teneur équivalente en $Al_2O_3$ de 23,4 % et par une teneur équivalente en $Na_2O$ de 19,9 %, sa densité étant de 1,5.

Le mélangeur industriel utilisé correspond à celui schématisé Figure 2. Ses dimensions sont respectivement:

- longueur des cavités 2 :        200 mm
- diamètre des cavités 2 :        25 mm
- longueur de la cavité 3 :        300 mm
- diamètre de la cavité 3 :        40 mm
- diamètre de l'extrémité inférieure du tronçon conique 5 :        200 mm
- diamètre le plus large de la conduite 4:        80 mm.

L'installation est telle que schématisée Figure 1.

Les pompes utilisées 18, 19, 20 sont des pompes volumétriques Moineau PCM (à débit constant, directement proportionnel à la vitesse de rotation du moteur) assurant un débit en sortie de 10 m$^3$/h et une pression de 10 bars sont à base de matériau Inox. Concernant la pompe 20 d'alimentation en polychlorure d'aluminium, celle-ci est à base d'un alliage Matériau Inox/Halar, Hastelloy C22, Hypalon pour répondre aux exigences de résistance à la corrosion qu'impose l'utilisation de ce réactif.

Le réacteur 8 est un réacteur en inox vitrifié, commercialisé par la Société De Dietrich, d'une capacité de 16 m$^3$ et résistant à une pression supérieure à 10 bars. Ce réacteur est muni d'une double enveloppe permettant les échanges thermiques et d'un agitateur de type impeller à deux contre-pales.

Le protocole opératoire suivi est le suivant :

Un pied de cuve constitué de 0,8 m$^3$ d'un polychlorure d'aluminium, présentant une basicité de 75 % et une teneur équivalente en alumine de 11 % en masse, est introduit dans le réacteur 8. Le pied de cuve qui recouvre les pales de l'agitateur, est chauffé à 60° C sous agitation constante. L'addition de polychlorure d'aluminium de formule Al(OH)$_{O,6}$ Cl$_{2,4}$, 14.H$_2$O, d'eau et d'aluminate de sodium est alors initiée. Les débits d'aluminate de sodium et de polychlorure d'aluminium sont maintenus constants, respectivement égaux à 9,14 m$^3$/h et 6,86 m$^3$/h.

Ces débits correspondent respectivement à des vitesses linéaires de 5,172 m/s et 3,882 m/s. Le débit total de sortie du mélangeur 7 en forme d'Y est de 16 m$^3$/h. Pendant toute la durée de l'addition la température de la masse contenue dans le réacteur est maintenue à 60° C. Au bout de 50 mn l'addition est complète, le volume final total de la masse réactive étant de 14 m$^3$. Le réacteur est alors fermé et la température du milieu réactionnel est montée de 60° C à 120° C à une vitesse de 0,5° C/mn. La température est alors maintenue à 120° C pendant 30 mn, à la suite de quoi le refroidissement est mis en route de telle sorte que la température passe de 120° C à 60° C en deux heures. Le produit résultant est stocké 12 h dans la réacteur de synthèse à une température comprise entre 40 et 50° C. Plusieurs prélèvements ont été effectués au cours de la réaction. L'aspect du produit est commenté dans le tableau 1 suivant:

TABLEAU 1

| Moment du prélèvement | Aspect du produit |
|---|---|
| Fin d'introduction des réactifs (T = 60° C) | un peu turbide présence de quelques mottes non dissoutes |
| Mûrissement à 100° C | quasiment tout le solide est dissout |
| Mûrissement à 120° C | limpide légèrement brun |
| Mûrissement de une nuit à 47° C | parfaitement limpide quasiment incolore |

Une analyse du produit obtenu après une nuit de mûrissement à 47° C est reportée dans le tableau 2 ci-dessous :

TABLEAU 2

| | |
|---|---|
| alumine (%) | 10,75 |
| basicité (%) | 72,3 |
| alumine théorique (%) | 10 |
| basicité théorique (%) | 74,7 |

Les valeurs théoriques indiquées au tableau 2 sont celles calculées à partir d'un bilan matière.

L'accord entre les analyses et les bilans matières est satisfaisant tenant compte des inconnues (volumes morts dans les conduites, composition du pied de cuve, ...) et la précision des débitmètres.

Ces résultats montrent que l'objectif que se propose de résoudre l'invention est effectivement atteint par mise en oeuvre du procédé de l'invention, d'autant que le produit obtenu est parfaitement limpide.

Une mesure de turbidité a conduit à une valeur de 17 NTU.

EXEMPLE 2

Ce deuxième exemple met en oeuvre les mêmes réactifs et conditions opératoires utilisés dans le cas de l'exemple 1, à l'exception de la composition du pied de cuve, celui-ci étant constitué de 0,8 m³ du polychlorure d'aluminium obtenu à l'exemple précédent.

Dans ce cas, une analyse du produit final a conduit aux valeurs suivantes de teneur équivalente en $Al_2O_3$ et de basicité :

TABLEAU 3

| | |
|---|---|
| alumine (%) | 11,1 |
| basicité (%) | 74,2 |
| alumine théorique (%) | 10,4 |
| basicité théorique (%) | 75,9 |

**Revendications**

1. Procédé de préparation de polychlorure d'aluminium basique comprenant (i) le mélange d'un polychlorure d'aluminium légèrement basique (réactif A) avec un aluminate de métal alcalin (réactif B) dans un mélangeur, et (ii) la dissolution du précipité obtenu dans un réacteur, procédé dans lequel ledit mélangeur est situé en amont dudit réacteur, et les réactifs A et B sont introduits séparément dans ledit mélangeur sous la forme de deux courants confluants, le mélange des deux réactifs A et B ayant lieu dans une zone d'écoulement turbulent au sein dudit mélangeur.

2. Procédé selon la revendication 1, caractérisé en ce que le mélange est réalisé dans un mélangeur constitué de trois chambres tubulaires communicantes et formant un Y, ledit polychlorure d'aluminium légèrement basique (réactif A) et ledit aluminate de métal alcalin (réactif B) entrant respectivement dans les deux chambres formant le V du Y, et ledit précipité sortant par la chambre située dans le prolongement de la bissectrice de l'angle formé par lesdites chambres en V, les débits des deux courants confluants de réactifs A et B étant tels que la mise en contact desdits réactifs a lieu dans une zone d'écoulement turbulent.

3. Procédé selon la revendication 1 ou 2, caractérisé en ce que la teneur équivalente en $Al_2O_3$ du polychlorure d'aluminium légèrement basique est comprise entre 13 et 18 %.

4. Procédé selon l'une quelconque des revendications 1 à 3, caractérisé en ce que la basicité du polychlorure d'aluminium légèrement basique est comprise entre 15 et 50 %.

5. Procédé selon l'une quelconque des revendications précédentes, caractérisé en ce que la teneur équivalente en $Al_2O_3$ de l'aluminate de métal alcalin est comprise entre 10 et 25 %, notamment entre 22 et 24 %.

6. Procédé selon l'une quelconque des revendications précédentes, caractérisé en ce que l'aluminate de métal alcalin est l'aluminate de sodium.

7. Procédé selon la revendication 6, caractérisé en ce que la teneur équivalente en $Na_2O$ de l'aluminate de sodium est comprise entre 18 et 22 %, notamment 19 et 21 %.

8. Procédé selon l'une quelconque des revendications précédentes, caractérisé en ce que l'aluminate de métal alcalin est dilué par de l'eau avant son introduction dans le mélangeur de forme Y.

9. Procédé selon l'une quelconque des revendications précédentes, caractérisé en ce que les chambres disposées en V par lesquelles les réactifs A et B sont introduits dans le mélangeur de forme Y sont de dimensions égales.

10. Procédé selon l'une quelconque des revendications précédentes, caractérisé en ce que les chambres disposées en V forment un angle droit.

11. Procédé selon l'une quelconque des revendications précédentes, caractérisé en ce que le mélangeur est en position verticale, lesdites chambres en V étant situées à la partie supérieure du mélangeur.

12. Procédé selon l'une quelconque des revendications précédentes, caractérisé en ce que lesdits courants confluants sont animés, indépendamment l'un de l'autre, de vitesses linéaires constantes.

13. Procédé selon l'une quelconque des revendications précédentes, caractérisé en ce que la dissolution du précipité est réalisée dans un autoclave, sous agitation constante.

14. Procédé selon la revendication 13, caractérisé en ce que la dissolution est réalisée par maintien du milieu réactionnel à une température de mûrissement comprise entre la température ambiante et 120° C, notamment entre 90 et 120° C.

15. Procédé selon la revendication 14, caractérisé en ce que le milieu reactionnel est maintenu à ladite température de mûrissement pendant 30 à 60 mn.

16. Procédé selon l'une des revendications 13 à 15, caractérisé en ce que le mélangeur est disposé immédiatement à l'entrée de l'autoclave de telle sorte que le mélange issu du mélangeur et contenant le précipité est directement introduit dans l'autoclave.

17. Procédé selon l'une quelconque des revendications précédentes, caractérisé en ce qu'il comprend les étapes consistant à :

   (i) introduire, dans un autoclave un pied de cuve constitué d'une solution aqueuse de polychlorure d'aluminium dont la basicité est la plus proche possible de celle du polychlorure d'aluminium basique ciblé, ledit autoclave étant muni d'une agitation efficace et étant équipé à l'un de ses orifices d'entrée, d'un mélangeur de type Y tel que défini ci-dessus;
   (ii) éventuellement chauffer l'autoclave maintenu sous agitation jusqu'à ce que la température du pied de cuve atteigne une valeur comprise entre 25 et 70° C, notamment voisine de 60° C;
   (iii) introduire respectivement une solution de polychlorure d'aluminium légèrement basique et un aluminate alcalin dans les deux chambres en V du mélangeur de type Y en ajustant des débits respectifs des deux courants de réactifs de façon à ce que ceux-ci entrent en contact l'un avec l'autre dans une zone d'écoulement turbulent, le mélange résultant sortant par la chambre située dans le prolongement de la bissectrice de l'angle formé par les chambres en V et entrant directement dans l'autoclave, ledit autoclave étant maintenu sous agitation constante pendant toute la durée de l'addition des réactifs;
   (iv) fermer l'autoclave en fin d'addition des réactifs, et le cas échéant, chauffer ledit autoclave jusqu'à ce que la température du milieu réactionnel atteigne une valeur comprise entre la température ambiante et 120° C;
   (v) maintenir le milieu réactionnel sous agitation efficace à ladite température pendant 30 à 60 mn;
   (vi) le cas échéant, refroidir l'installation, et, soutirer de l'autoclave le polychlorure d'aluminium basique attendu.

18. Procédé selon l'une quelconque des revendications précédentes, caractérisé en ce que le polychlorure d'aluminium basique obtenu présente une basicité comprise entre 55 et 80 %, en particulier entre 58 et 80 %.

19. Procédé selon l'une quelconque des revendications précédentes, caractérisé en ce que la teneur équivalente en $Al_2O_3$ du polychlorure d'aluminium basique obtenu est comprise entre 11 et 18 %.

**Claims**

1. Process for preparation of basic aluminium polychloride comprising (i) the mixture of a basic aluminium polychloride (reagent A) with an alkaline metal aluminate (reagent B) in a mixer, and (ii) the dissolution of the precipitate obtained in a reactor, process in which said mixer is situated upstream of said reactor and the reagents A and B are introduced separately into said mixer in the form of two confluent currents, the mixing of the two reagents A and B taking place in a turbulent flow zone within said mixer.

2. Process according to claim 1, characterised by the fact that the mixing is realised in a mixer consisting of three interconnecting tubular chambers which form a Y, said slightly basic aluminium polychloride (reagent A) and said alkaline metal aluminate (reagent B) entering respectively into the two chambers forming the V of the Y and said precipitate exiting by the chamber situated in the extension of the bisector of the angle formed by said chambers in a V shape, the flows of both confluent currents of reagents A and B being such that the contact between said reagents occurs in a turbulent flow zone.

3. Process according to claim 1 or 2, characterised by the fact that the equivalent content of $Al_2O_3$ of the slightly basic aluminium polychloride lies between 13 and 18%.

4. Process according to any of Claims 1 to 3, characterised by the fact that the basicity of the slightly basic aluminium polychloride lies between 15 and 50%.

5. Process according to any of the preceding claims, characterised by the fact that the equivalent content of $Al_2O_3$ of the slightly basic aluminium polychloride lies between 10 and 25%, especially between 22 and 24%.

6. Process according to any of the preceding claims, characterised by the fact that the alkaline metal aluminate is sodium aluminate.

7. Process according to claim 6, characterised by the fact that the equivalent content of $Na_2O$ of the sodium aluminate lies between 18 and 22%, especially between 19 and 21%.

8. Process according to any of the preceding claims, characterised by the fact that the alkaline metal aluminate is diluted by water before being introduced into the Y-shaped mixer.

9. Process according to any of the preceding claims, characterised by the fact that the chambers arranged in a V-shape by which the reagents A and B are introduced into the Y-shaped mixer are of equal dimensions.

10. Process according to any of the preceding claims, characterised by the fact that the chambers arranged in a V shape form a right angle.

11. Process according to any of the preceding claims, characterised by the fact that the mixer is in a vertical position, said V-form chambers being situated on the upper part of the mixer.

12. Process according to any of the preceding claims, characterised by the fact that said confluent currents are driven, independently of each other, at constant linear speeds.

13. Process according to any of the preceding claims, characterised by the fact that the dissolution of the precipitate is realised in an autoclave, under constant agitation.

14. Process according to claim 13, characterised by the fact that the dissolution is realised by maintaining the reactive medium at a maturing temperature between ambient temperature and 120 °C, especially between 90 and 120 °C.

15. Process according to claim 13, characterised by the fact that the reactive medium is maintained at said maturing temperature for 30 to 60 minutes.

16. Process according to one of the claims 13 to 15, characterised by the fact that the mixer is placed immediately at the entrance to the autoclave in such a way that the mixture emerging from the mixer and containing the precipitate is introduced directly into the autoclave.

17. Process according to any of the preceding claims, characterised by the fact that it comprises stages consisting of:

(i) introducing in an autoclave a vat base consisting of an aqueous solution of aluminium polychloride the basicity of which is as close as possible to that of the basic aluminium polychloride targeted, said autoclave being equipped with effective agitation and being fitted at one of its entrance orifices with a Y-type mixer as defined above;
(ii) if necessary, heating the autoclave maintained under agitation until the temperature of the vat base reaches a value of between 25 and 70 °C, especially in the region of 60 °C;
(iii) introducing a solution of slightly basic aluminium polychloride and an alkaline aluminate respectively into the two chambers in the V of the Y-type mixer adjusting the respective rates of flow of the two currents of reagents in such a way that they come into contact with each other in a turbulent flow zone, the resulting mixture exiting by the chamber situated in the extension of the bisector of the angle formed by the V chambers and entering directly into the autoclave, said autoclave being maintained under constant agitation for the entire duration of the addition of the reagents;

(iv) closing the autoclave once the reagents have been added, and if necessary, heating said autoclave until the temperature of the reactive medium reaches a value between ambient temperature and 120 °C;

(v) maintaining the reactive medium under effective agitation at said temperature for between 30 and 60 minutes;

(vi) if necessary, cooling down the installation and tapping the expected basic aluminium polychloride from the autoclave.

**18.** Process according to any of the preceding claims, characterised by the fact that the basic aluminium polychloride obtained displays a basicity of between 55 and 80%, especially between 58 and 80%.

**19.** Process according to any of the preceding claims, characterised by the fact that the equivalent content of $Al_2O_3$ of the slightly basic aluminium polychloride lies between 11 and 18%.

**Patentansprüche**

**1.** Verfahren zur Herstellung von basischem Polyaluminiumchlorid, umfassend (i) das Mischen eines leicht basischen Polyaluminiumchlorids (Reagenz A) mit einem Alkalimetallaluminat (Reagenz B) in einem Mischer und (ii) das Lösen des erhaltenen Niederschlags in einem Reaktor, wobei sich bei dem Verfahren der Mischer stromaufwärts des Reaktors befindet, die Reagenzien A und B getrennt voneinander in Form zweier zusammenfließender Ströme in den Mischer eingeleitet werden und das Mischen der beiden Reagenzien A und B in einer Zone turbulenter Strömung im Inneren des Mischers erfolgt.

**2.** Verfahren nach Anspruch 1, dadurch gekennzeichnet, dass das Gemisch in einem Mischer hergestellt wird, der aus drei röhrenförmigen, kommunizierenden, ein Y bildenden Kammern besteht, wobei das leicht basische Polyaluminiumchlorid (Reagenz A) und das Alkalimetallaluminat (Reagenz B) jeweils in die zwei Kammern eintreten, die das V des Y bilden, und der Niederschlag durch die Kammer austritt, die sich in der Verlängerung der Winkelhalbierenden des Winkels befindet, der durch die V-förmigen Kammern gebildet wird, und die Ausströmungsmengen der beiden zusammenfließenden Ströme der Reagenzien A und B so ist, dass das Zusammenbringen dieser Reagenzien in einer Zone turbulenter Strömung erfolgt.

**3.** Verfahren nach Anspruch 1 oder 2, dadurch gekennzeichnet, dass der zu $Al_2O_3$ äquivalente Gehalt an leicht basischem Polyaluminiumchlorid 13 bis 18% umfasst.

**4.** Verfahren nach einem der Ansprüche 1 bis 3, dadurch gekennzeichnet, dass die Basizität des leicht basischen Polyaluminiumchlorids 15 bis 50% umfasst.

**5.** Verfahren nach einem der vorstehenden Ansprüche, dadurch gekennzeichnet, dass der zu $Al_2O_3$ äquivalente Gehalt an Alkalimetallaluminat 10 bis 25%, insbesondere 22 bis 24% umfasst.

**6.** Verfahren nach einem der vorstehenden Ansprüche, dadurch gekennzeichnet, dass das Alkalimetallaluminat Natriumaluminat ist.

**7.** Verfahren nach Anspruch 6, dadurch gekennzeichnet, dass der zu $Na_2O$ äquivalente Gehalt an Natriumaluminat 18 bis 22%, insbesondere 19 bis 21% umfasst.

**8.** Verfahren nach einem der vorstehenden Ansprüche, dadurch gekennzeichnet, dass das Alkalimetallaluminat vor seiner Einleitung in den Y-förmigen Mischer mit Wasser verdünnt wird.

**9.** Verfahren nach einem der vorstehenden Ansprüche, dadurch gekennzeichnet, dass die V-förmig angeordneten Kammern, durch die die Reagenzien A und B in den Y-förmigen Mischer eingeleitet werden, gleiche Größe besitzen.

**10.** Verfahren nach einem der vorstehenden Ansprüche, dadurch gekennzeichnet, dass die V-förmig angeordneten Kammern einen rechten Winkel bilden.

**11.** Verfahren nach einem der vorstehenden Ansprüche, dadurch gekennzeichnet, dass der Mischer eine vertikale Stellung hat und die V-förmigen Kammern sich am oberen Abschnitt des Mischers befinden.

**12.** Verfahren nach einem der vorstehenden Ansprüche, dadurch gekennzeichnet, dass man die zusammenfließenden Ströme unabhängig voneinander mit konstanten Lineargeschwindigkeiten strömen lässt.

**13.** Verfahren nach einem der vorstehenden Ansprüche, dadurch gekennzeichnet, dass das Lösen des Niederschlags in einem Autoklaven unter konstantem Rühren erfolgt.

**14.** Verfahren nach Anspruch 13, dadurch gekennzeichnet, dass das Lösen erfolgt, indem man das Reaktionsmedium bei einer Reifungstemperatur von Umgebungstemperatur bis 120°C, insbesondere von 90 bis 120°C belässt.

**15.** Verfahren nach Anspruch 14, dadurch gekennzeichnet, dass das Reaktionsmedium 30 bis 60 Minuten bei dieser Reifungstemperatur belassen wird.

**16.** Verfahren nach einem der Ansprüche 13 bis 15, dadurch gekennzeichnet, dass der Mischer unmittelbar am Eingang des Autoklaven so angebracht ist, dass das aus dem Mischer tretende Gemisch, das den Niederschlag enthält, direkt in den Autoklaven geleitet wird.

**17.** Verfahren nach einem der vorstehenden Ansprüche, dadurch gekennzeichnet, dass es die folgenden Schritte umfasst:

(i) Einbringen in einen Autoklaven einen Tankrückstand, bestehend aus einer wässrigen Polyaluminiumchloridlösung, deren Basizität so nah wie möglich bei der des basischen Ziel-Polyaluminiumchlorids liegt, wobei der Autoklav wirksam gerührt werden kann und an einer seiner Eintrittsöffnungen mit einem Mischer vom Y-Typ, wie vorstehend definiert, ausgerüstet ist;
(ii) gegebenenfalls Erhitzen des unter Rühren belassenen Autoklaven bis die Temperatur des Tankrückstands einen Wert von 25 bis 70°C, insbesondere nahe 60°C annimmt;
(iii) Einbingen jeweils einer leicht basischen Polyaluminiumchloridlösung und eines Alkalialuminats die die beiden V-Kammern des Mischers vom Y-Typ, indem die jeweiligen Ausströmungsmengen der beiden Reagenzströme so eingestellt werden, dass diese in Kontakt miteinander in eine Zone turbulenter Strömung eintreten, wobei das erhaltene Gemisch durch die Kammer, die sich in der Verlängerung der von den V-förmigen Kammern gebildeten Winkelhalbierenden, ausströmt und direkt in den Autoklaven eintritt, wobei der Autoklav während der gesamten Dauer der Reagenzienzugabe unter Rühren belassen wird;
(iv) Schließen des Autoklaven nach Beendigung der Reagenzienzugabe und gegebenenfalls Erhitzen des Autoklaven, bis die Temperatur des Reaktionsgemischs einen Wert von Umgebungstemperatur bis 120°C annimmt;
(v) Belassen des Reaktionsmediums 30 bis 60 Minuten unter wirksamem Rühren bei dieser Temperatur;
(vi) gegebenenfalls Abkühlen der Anlage und Entnehmen des erwarteten Polyaluminiumchlorids aus dem Autoklaven.

**18.** Verfahren nach einem der vorstehenden Ansprüche, dadurch gekennzeichnet, dass das erhaltene basische Polyaluminiumchlorid eine Basizität von 55 bis 80%, insbesondere 58 bis 80% aufweist.

**19.** Verfahren nach einem der vorstehenden Ansprüche, dadurch gekennzeichnet, dass der zu $Al_2O_3$ äquivalente Gehalt an basischem Polyaluminiumchlorid 11 bis 18% umfasst.

FIG.1

FIG.2